# EUROPÄISCHE PATENTSCHRIFT

(11) **EP 3 107 713 B1**
(45) Veröffentlichungstag und Bekanntmachung des Hinweises auf die Patenterteilung: **15.05.2019**
(21) Anmeldenummer: 15703987.6
(22) Anmeldetag: 11.02.2015
(51) Int. Cl.: B29C 65/20

(54) **SCHWEISSSPIEGEL ODER VERSCHLEISSPLATTE**
WELDING MIRROR OR WEAR PLATE
MIROIR DE SOUDAGE OU PLAQUE D'USURE

(30) Priorität: 21.02.2014 DE 102014203178
(43) Veröffentlichungstag der Anmeldung: 28.12.2016
(73) Patentinhaber: Novoplan GmbH, 73431 Aalen (DE)
(72) Erfinder: HAMER, Burkhard, 73434 Aalen (DE); SEITZ, Ferdinand, 73434 Aalen (DE)
(74) Vertreter: Dr. Weitzel & Partner
(86) Internationale Anmeldenummer: PCT/EP2015/052851
(87) Internationale Veröffentlichungsnummer: WO 2015/124478

(56) Entgegenhaltungen:
- DE-A1-102008 012 021
- DE-B- 1 069 981
- DE-U1- 8 905 278
- DE-U1- 20 218 928
- DE-U1-202007 017 546
- JP-A- H05 278 115

## Beschreibung

Die Erfindung betrifft einen Schweißspiegel zum Verschweißen von Polyolefinen nach der im Oberbegriff von Anspruch 1 näher definierten Art. Außerdem betrifft die Erfindung eine Verschleißplatte für einen Schweißspiegel gemäß dem Oberbegriff des Anspruchs 4.

Schweißspiegel zum Verschweißen von Polyolefinen, beispielsweise zum Verschweißen von Polypropylen- oder Polyethylenmaterialen, sind aus dem allgemeinen Stand der Technik bekannt. Sie können beispielswiese als Heizvorrichtungen für das Muffen- und Stumpfschweißen ausgebildet sein. Sie werden insbesondere zum Verschweißen von Rohren und/oder Fensterrahmen eingesetzt. Typischerweise umfasst der Schweißspiegel dabei ein Grundmaterial, welches über Heizelemente beheizbar ist. Hierfür ist beispielsweise eine elektrische Widerstandsheizung oder auch eine Induktionsheizung denkbar. Dieses Grundmaterial ist dann typischerweise im Bereich einer Kontaktschicht, welche mit dem aufzuschmelzenden Polyolefin während des Verschweißens in Berührung kommt, mit einer PTFE-Beschichtung versehen, um ein Anhaften der Polyolefine bestmöglichst zu vermeiden. In der Praxis ist es nun so, dass diese PTFE-Beschichtung sehr starkem Verschleiß unterliegt. Mit zunehmendem Verschleiß leidet die Qualität der Schweißung, sodass derartige Schweißspiegel sehr häufig ausgetauscht werden müssen. Dies führt zu hohen Produktionskosten und macht typischerweise auch eine Lagerhaltung einer großen Anzahl von Schweißspiegel notwendig, um die Zeiten, in denen die Produktion ausfällt, zu minimieren. Auch dies ist ein weiterer erheblicher Kostenfaktor.

Aus der DE 89 05 278 U1 ist ein Schweißspiegel bekannt, der eine Verschleißschicht aus einer im Wesentlichen porenfreien Nickelbasishartlegierung aufweist, welche ferner mit Kohlenstoff legiert sein kann.

Zum weiteren allgemeinen Stand der Technik kann außerdem auf die nachfolgenden Schriften verwiesen werden:
DE 10 69 981 B
DE 10 2008 012 021 A1
DE 202 18 928 U1
JP H05 278115 A
DE 20 2007 017546 U1

Die Aufgabe der hier vorliegenden Erfindung besteht nun darin, einen Schweißspiegel bzw. eine Verschleißplatte für einen Schweißspiegel zum Verschweißen von Polyolefinen anzugeben, welche(-r) diese Nachteile vermeidet, und welche(-r) die Lebensdauer, die Verschleißfestigkeit und damit den Wartungsaufwand gegenüber derartigen Systemen verbessert.

Erfindungsgemäß wird diese Aufgabe durch einen Schweißspiegel mit den Merkmalen im Anspruch 1 gelöst. Vorteilhafte Ausgestaltungen und Weiterbildungen des Schweißspiegels ergeben sich aus den hiervon abhängigen Unteransprüchen.

Der erfindungsgemäße Schweißspiegel ist so aufgebaut, dass er anstelle einer Kontaktschicht aus Polytetrafluorethylen (PTFE) eine Kontaktschicht aufweist, welche eine metallische Trägermatrix mit darin eingelagerten nichtmetallischen Partikeln aufweist. Eine solche metallische Trägermatrix mit darin eingelagerten nichtmetallischen Partikeln, also organischen oder keramischen Partikeln, erlaubt eine hohe Verschleißfestigkeit und kann durch die geeignete Auswahl der organischen oder keramischen Partikel gleichzeitig die Anhaftung des aufgeschmolzenen Polyolefins während der Schweißung minimieren. Hierdurch entsteht ein sehr verschleißfester Aufbau mit hoher Lebensdauer, welcher eine sehr gute Qualität der Schweißung ermöglicht. Außerdem werden Kosten für die Wartung, für Produktionsausfälle, für Lagerhaltung von Reserve-Schweißspiegeln und dergleichen minimiert.

Prinzipiell ist es denkbar, das Grundmaterial direkt mit der erfindungsgemäßen Kontaktschicht zu versehen. Gemäß einer vorteilhaften Weiterbildung der erfindungsgemäßen Idee kann es auch vorgesehen sein, dass die Kontaktschicht auf eine Verschleißplatte aufgebracht ist, welche lösbar mit dem Grundmaterial verbunden ist. Dies hat den entscheidenden Vorteil, dass die Verschleißplatte durch ihre lösbare Verbindung mit dem Grundmaterial des Schweißspiegels sehr einfach ausgetauscht werden kann. So ist es beispielsweise denkbar, die Kontaktschicht auf ein dünnes Blech als Verschleißplatte aufzubringen. Dieses dünne Blech kann dann mit dem Grundmaterial des Schweißspiegels beispielsweise verschraubt oder verklammert werden. Auch andere Befestigungsvarianten, beispielsweise über eine Verrastung, ein magnetisches Anhaften, das Umschlingen des Grundmaterials mit dem Verschleißplatte oder dergleichen, sind grundsätzlich denkbar. Neben der ohnehin schon sehr hohen Verschleißfestigkeit der erfindungsgemäßen Kontaktschicht ermöglicht diese besonders günstige Ausführungsvariante des erfindungsgemäßen Schweißspiegels dann zusätzlich eine sehr einfache und platzsparende Vorratshaltung von mit der Kontaktschicht versehenen Verschleißplatten. Beispielsweise kann eine blechförmige Verschleißplatte mit minimalem Raumbedarf in großer Menge bevorratet werden. Wird nun ein Verschleiß der Kontaktschicht festgestellt, dann kann sehr einfach und effizient die lösbar mit dem Schweißspiegel verbundene Verschleißplatte von dem Grundmaterial gelöst und durch eine neue Verschleißplatte ersetzt werden. Die verbrauchten Verschleißplatten können dann entweder recycelt, erneut beschichtet oder entsorgt werden.

Ferner löste eine Verschleißplatte mit den Merkmalen des Anspruchs 4 die Aufgabe der Erfindung. Die Kontaktschicht aus der metallischen Trägermatrix und den nichtmetallischen Partikel die darin eingelagert sind, ist dann lediglich auf der Verschleißplatte angeordnet mit den oben genannten Vorteilen. Ein solche Verschleißplatte als eigenständiges Bauteil kann für verschiedene Schweißspiegel konzipiert werden. Mit ihr lassen sich beispielsweise auch bestehende Schweißspiegel einfach nachrüsten.

Weitere vorteilhafte Ausgestaltungen des Schweißspielgels und der Verschleißplatte sind in den anhängigen Ansprüchen angegeben.

Die Kontaktschicht selbst kann dabei sehr dünn ausgeführt werden. Gemäß einer vorteilhaften Weiterbildung der Erfindung ist sie mit einer Schichtstärke von 1 bis 1000 µm ausgebildet. Eine solche sehr geringe Schichtstärke der Kontaktschicht reicht bereits aus, um die oben genannten Vorteile zu erzielen, sodass die Kontaktschicht damit hinsichtlich des Materials und der Herstellung entsprechend kostengünstig realisiert werden kann.

Entsprechend einer vorteilhaften Ausgestaltung des erfindungsgemäßen Schweißspiegels weisen die nichtmetallischen Partikel eine Partikelgröße d₅₀ nach Gauß 'scher Normalverteilung von 0,1 - 50 µm auf. Eine solche Partikelgröße hat sich als ideal erwiesen, um eine möglichst verschleißfeste Kontaktschicht zu erzielen.

Eine vorteilhafte Weiterbildung sieht es vor, dass das Grundmaterial und/oder die Verschleißplatte aus Legierungen mit Eisen, Kupfer und/oder Aluminium bestehen. Insbesondere Eisenlegierungen wie beispielsweise Stahl oder Gusseisen oder auch Kupferlegierungen haben dabei den entscheidenden Vorteil, dass diese nicht nur durch Wärmeübertragung beispielsweise durch eine elektrische Widerstandsheizung durch Heizelemente beheizt werden können, sondern auch durch Heizelemente einer Induktionsheizung. Hierdurch lässt sich ein sehr energieeffizientes und zielgerichtetes Beheizen erreichen.

Eine Alternative für die Materialien wäre beispielsweise ein keramisches Material, welches insbesondere eine zumindest geringe elektrische Leitfähigkeit aufweist. Ein metallisches Material oder ein keramisches Material mit einer solchen zumindest geringen elektrischen Leitfähigkeit ist beispielsweise ideal geeignet, um eine elektrochemische beziehungsweise chemische insbesondere außenstromlose Beschichtung des Grundmaterials oder der Verschleißplatte mit der Trägermatrix der Kontaktschicht zu ermöglichen.

In diese gemäß einer vorteilhaften Weiterbildung der Erfindung vorzugsweise chemisch oder elektrochemisch abgeschiedene Trägermatrix werden dann die nichtmetallischen Partikel eingelagert, welche insbesondere eines oder mehrere der nachfolgenden Materialen umfassen:
- Keramiken, insbesondere Graphite, Karbide oder Nitride,
- PEEK
- PPSU
- PTFE
- PFA
- MFA
- FEP und/oder
- CFx.

Die Partikel können dabei in unterschiedlichen Partikelformen vorliegen, beispielsweise globular, lamellar, kubisch oder hexagonal.

Die metallische Trägermatrix umfasst dabei insbesondere Nickel oder Nickel-Phosphor oder gegebenenfalls auch Kupfer als ihre wesentlichen Bestandteile. Wie bereits erwähnt, kann die metallische Trägermatrix chemisch oder elektrochemisch abgeschieden und bei Bedarf über ein solches Verfahren auch wieder gänzlich entfernt werden, sodass beispielsweise eine Neubeschichtung zur Aufbereitung von verschlissenen Schweißspiegeln oder Verschleißplatten einfach und effizient möglich ist.

Neben diesen bevorzugten Verfahren zum Auftragen der metallischen Trägermatrix sind auch andere Varianten denkbar, insbesondere eine Gasphasenabscheidung oder andere Verfahren der Galvano- bzw. Dünnschichttechnik.

Gemäß einer weiteren sehr günstigen Ausgestaltung des erfindungsgemäßen Schweißspiegels beziehungsweise der erfindungsgemäßen Verschleißplatte weist das die Kontaktschicht tragende Material eine strukturierte Oberfläche mit einer mittleren Rauheit Ra von 1 - 1000 µm auf. Eine solche Veränderung der Oberflächenstruktur, welche beispielsweise durch Ätzen oder Erodieren erzielt werden kann, bildet sich bei der Beschichtung des die Kontaktschicht tragenden Materials auch in der Oberfläche der Kontaktschicht entsprechend ab, da diese der Oberfläche des Grundmaterials beziehungsweise der Verschleißplatte folgt und durch die sehr dünne Schichtstärke von typischerweise weniger als 1000 µm Rauheit abbildet. Durch die Rauheit wird die Anhaftung des Schweißmaterials zusätzlich zu den Eigenschaften der Kontaktschicht aufgrund ihrer mechanischen Formgebung (Vakuumeffekt) reduziert und gleichzeitig wird durch eine Reduzierung der Kontaktfläche zwischen der Kontaktschicht und dem zu verschweißenden Polyolefin der Verschleiß nochmals weiter reduziert.

Eine weitere vorteilhafte Ausgestaltung sieht es nun außerdem vor, dass die Anzahl der nichtmetallischen Partikel in der metallischen Trägermatrix sich je nach Abstand vom die Kontaktschicht tragenden Material verändert, insbesondere mit zunehmendem Abstand von dem die Kontaktschicht tragenden Material zunimmt. Ein solcher Gradient in der Verteilung der nichtmetallischen Partikel in der metallischen Trägermatrix ermöglicht es, mit einer vergleichsweise geringen Menge von Partikeln, im Bereich der später mit dem Polyolefin in Kontakt kommenden Oberfläche der Kontaktschicht vergleichsweise viele derartige Partikel anzuordnen, während je tiefer man in die Kontaktschicht eindringt, die durchschnittliche Anzahl der Partikel abnimmt. So lässt sich im Bereich der Oberfläche eine sehr gute und verschleißfeste Reduzierung der Gefahr einer Anhaftung erzielen, ohne dass eine große Menge an Partikeln für die gesamte Schichtstärke der Kontaktschicht benötigt wird. Dies reduziert die Kosten für die Kontaktschicht und erlaubt ihre möglichst kosteneffiziente Herstellung.

In einer weiteren sehr günstigen Ausgestaltung der Erfindung kann es nun ferner vorgesehen sein, dass die Kontaktschicht auf der Oberfläche des die Kontaktschicht tragenden Materials der Querschnittsform der zu schweißenden Bauteile folgend ausgebildet ist. Der Schweißspiegel oder die Verschleißplatte kann also in dieser vorteilhaften Weiterbildung der erfindungsgemäßen Idee mit der Kontaktschicht an der Oberfläche so beschichtet sein, dass diese nur dort vorhanden ist, wo sie auch notwendig ist. Beispielsweise bei größeren Bauteilen wie großen Rohren oder dergleichen ist die Kontaktschicht nur in einem ringförmigen Bereich, in welchem das Material des Rohrs an dem Schweißspiegel anliegt, notwendig. Insbesondere in dem mittig liegenden Bereich ist sie nicht notwendig und wird auch mechanisch nicht belastet, verschleißt also in diesem Bereich nicht oder allenfalls minimal durch die Temperaturschwankungen, denen sie ausgesetzt ist. Durch die eben beschriebene besonders vorteilhafte Ausgestaltung der erfindungsgemäßen Idee kann in diesem Bereich also auf die Kontaktschicht verzichtet werden, sodass diese nur da angeordnet ist, wo die Oberfläche des Schweißspiegels beziehungsweise der Verschleißplatte auch mit dem Material, welches verschweißt werden soll, in Berührung kommt. Hierdurch wird die benötigte Fläche der Kontaktschicht verringert und die Materialkosten werden nochmals gesenkt. Insbesondere bei der Ausgestaltung als die Kontaktschicht tragende Verschleißplatte, welches lösbar mit dem Grundmaterial des Schweißspiegels verbunden werden kann, können in diesem dann nicht mit der Kontaktschicht versehenen Bereich der Verschleißplatte auch Befestigungsmittel wie beispielsweise Schrauben, Klammern oder dergleichen angeordnet werden.

Weitere vorteilhafte Ausgestaltungen des erfindungsgemäßen Schweißspiegels oder Verschleißplattes ergeben sich auch aus den Ausführungsbeispielen, welche unter Bezugnahme auf die Figuren nachfolgend beschrieben sind.

Dabei zeigen:
- Figur 1: eine schematische Darstellung eines Schweißspiegels in einer ersten möglichen Ausführungsvariante; und
- Figur 2: eine schematische Darstellung eines Schweißspiegels in einer zweiten möglichen Ausführungsvariante.

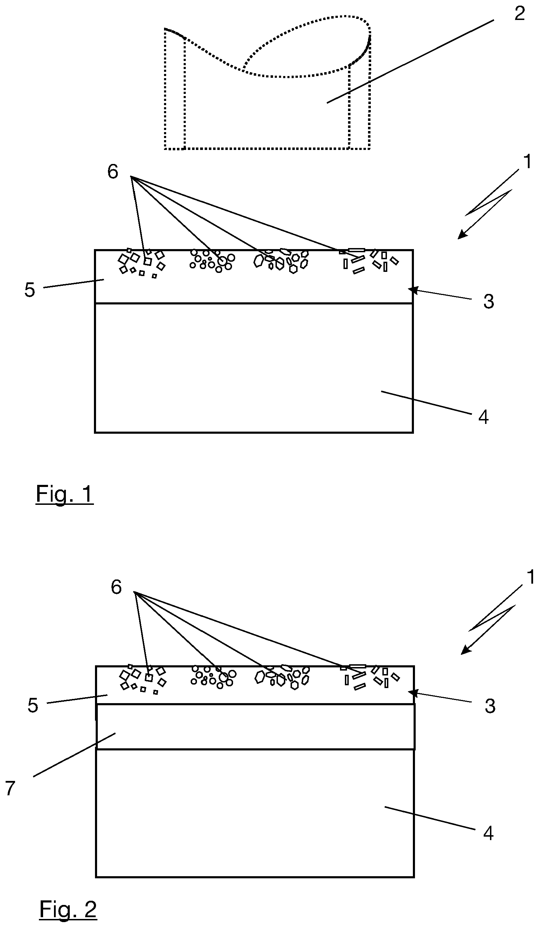

In der Darstellung der Figur 1 ist ein Schweißspiegel 1 schematisch dargestellt, welcher zum Verschweißen von Polyolefinen, beispielsweise von Rohrleitungen aus Polypropylen, vorgesehen sein kann. Eine solche Rohrleitung 2 ist im Querschnitt oberhalb des Schweißspiegels 1 punktiert angedeutet. Die der Rohrleitung 2 zugewandte Oberfläche des Schweißspiegels 1 trägt eine in der Figur sehr stark überhöht dargestellte Kontaktschicht 3, welche in dem hier dargestellten Beispiel der Figur 1 auf einem Grundmaterial 4 des Schweißspiegels 1 angeordnet ist. Das Grundmaterial 4, welches auch Widerstandsheizelemente mit umfassen kann, oder welches durch Widerstandsheizelemente oder durch Induktionsheizung beheizt werden kann, kann beispielsweise aus Stahl, Gusseisen, Kupfer, Aluminium oder Keramik sein. Typischerweise hat es in Richtung der Kontaktschicht 3 eine geschliffene, polierte oder durch Ätzen oder Erodieren gezielt strukturierte Oberfläche. Im Falle einer solchen Oberflächenstruktur ist die Strukturierung so ausgebildet, dass eine mittlere Rauheit Ra von 1 - 1000 µm erzielt wird. Auf diese in der Darstellung der Figur 1 oben liegende Oberfläche des Grundmaterials 4 wird dann die Kontaktschicht 3, welche später mit dem aufzuschmelzenden Material der Rohrleitung 2 in Verbindung kommt, aufgebracht.

Die Kontaktschicht 3 besteht aus einer metallischen Trägermatrix 5 und darin eingelagerten Partikeln 6, von welchen nur in einzelnen Bereichen der metallischen Trägermatrix 5 beispielhaft einige der Partikel 6 angedeutet sind. Die metallische Trägermatrix ist vorzugsweise über außenstromlose chemische beziehungsweise elektrochemische Verfahren aufgebracht und ist beispielsweise eine Nickel- oder Nickel-Phosphor-Schicht. Weitere Schichten und Bestandteile können insbesondere Kupfer oder Hartchrom sein. Die Nickel- beziehungsweise Nickel-Phosphor-Schicht ist jedoch besonders einfach und effizient in der Anwendung und kann durch chemisches Beschichten aufgetragen und bei Bedarf auch wieder rückstandslos entfernt werden. In diese metallische Trägermatrix 5 sind dann nichtmetallische Partikel 6 eingelagert. Diese können wie angedeutet lamellar, globular, kubisch oder auch hexagonal ausgebildet sein. Sie weisen eine typische Partikelgröße d₅₀ von 0,1 - 50 µm nach Gauß 'scher Normalverteilung auf. Die nichtmetallischen Partikel bestehen insbesondere aus Keramik oder Kunststoff, beispielsweise aus PEEK, PPSU, PTFE oder Graphiten, Karbiden oder Nitriden. Diese können auch untereinander gemischt in der Kontaktschicht 3 auftreten. Eine solche Kontaktschicht 3 aus metallischer Trägermatrix und nichtmetallischen Partikeln 6 hat sich als außerordentlich verschleißfest erwiesen und ermöglicht es dennoch, die Anhaftung des Materials der Rohrleitung 2 beim Aufschmelzen zum Verschweißen der Rohrleitung 2 an die Oberfläche der Kontaktschicht 3 zu minimieren.

Wie bereits erwähnt ist in der Darstellung der Figuren die Kontaktschicht 3 stark überhöht dargestellt. In einem realen Aufbau hat sie eine Schichtdicke in der Größenordnung von 1 - 1000 µm, ist also eine vergleichsweise dünne Schicht, durch welche eine gegebenenfalls strukturierte Oberfläche des Grundmaterials 4 bei der Ausführung gemäß Figur 1 durchdringt, sodass in diesem Fall auch die Oberfläche der Kontaktschicht 3 entsprechend strukturiert wäre. Damit wird durch Vakuumeffekte die Gefahr einer Anhaftung noch weiter verringert und durch eine geringere mit der Rohrleitung 2 in Berührung kommende Fläche außerdem der Verschleiß minimiert.

Trotz der Langlebigkeit kommt es selbstverständlich dennoch zu einem Verschleiß der Kontaktschicht 3. Im Ausführungsbeispiel der Figur 1 müsste dann der Schweißspiegel 1 ersetzt und der verschlissene Schweißspiegel aufbereitet werden. Hierfür wird die Trägermatrix 5 mit den eingelagerten Partikeln 6 durch chemische Verfahren wieder gänzlich entfernt und eine neue Beschichtung vorgenommen. Dies ist entsprechend aufwändig und setzt voraus, dass mehrere Schweißspiegel 1 vorrätig sind, wenn die Produktion der verschweißten Rohre weitergehen soll. Diesem Problem hilft die in Figur 2 gezeigte Ausführungsvariante elegant ab. Der Schweißspiegel 1 besteht auch hier wieder aus dem Grundmaterial 4 und ist mit der Kontaktschicht 3 versehen, welche analog zur Darstellung in Figur 1 ausgeführt ist. Diese Kontaktschicht 3 ist nun jedoch nicht auf der Oberfläche des Grundmaterials 4 angeordnet, sondern auf einer Verschleißplatte 7, welches lösbar mit dem Grundmaterial 4 des Schweißspiegels 1 verbunden werden kann. Die Verschleißplatte 7 ist dann mit der Kontaktschicht 3 versehen. So entsteht eine austauschbare Oberfläche des Schweißspiegels 1, welche bei Bedarf sehr einfach und schnell ausgewechselt werden kann, wobei die Kombination aus Verschleißplatte 7 und Kontaktschicht 3 bei einer Vorratshaltung von Ersatzteilen weitaus weniger Bauraum benötigt und Kosten bindet, als es der komplette Schweißspiegel 1 tun würde. Ansonsten gilt auch hier, beispielsweise für die Materialien und die Oberfläche der Verschleißplattes 7 das oben beim Material und Oberfläche des Grundmaterials 4 erwähnte, ebenso wie für die Kontaktschicht 3.

Die Kontaktschicht 3 selbst oder im Falle der Ausführungsvariante gemäß Figur 2 gegebenenfalls auch die Verschleißplatte 7 kann dabei in ihrer Formgebung so ausgebildet sein, dass es der Querschnittsform der zu verschweißenden Bauteile folgt. Im dargestellten Ausführungsbeispiel der Figur 1, wenn Rohrleitungen 2 verschweißt werden sollen, wäre es also ausreichend, die Kontaktschicht 3 sowie gegebenenfalls auch die Verschleißplatte 7 ringförmig auszubilden, um Material für die Kontaktschicht 3 und die Verschleißplatte 7 entsprechend einzusparen. Bei einer Schweißung von anderen Gegenständen könnte dies entsprechend erfolgen und je nach Größe und Komplexität der Form des Gegenstands und in dem Gegenstand befindlichen Hohlräumen ebenfalls zu einer entsprechenden Einsparung von Material führen. Bei der Verwendung der Verschleißplatte 7 können solche aufgrund der Querschnittsform des zu verschweißenden Bauteils nicht mit dem Polyolefin in Kontakt kommende Bereiche des Verschleißplattes dazu genutzt werden, die Verschleißplatte 7 auf dem Grundmaterial 4 zu befestigen, beispielsweise mit diesem zu verschrauben.

## Patentansprüche

1. Schweißspiegel (1) zum Verschweißen von Polyolefinen, mit
1.1 einem durch Heizelemente beheizbaren Grundmaterial (4); und
1.2 einer auf dem Grundmaterial (4) angeordneten Kontaktschicht (3), welche dazu bestimmt ist, beim Aufschmelzen der Polyolefine mit diesen in Kontakt zu kommen,
**dadurch gekennzeichnet, dass**
1.3 die Kontaktschicht (3) eine metallische Trägermatrix (5) mit darin eingelagerten nichtmetallischen Partikeln (6) aufweist.

2. Schweißspiegel (1) nach Anspruch 1, **dadurch gekennzeichnet, dass** die Kontaktschicht (3) auf das Grundmaterial (4) aufgebracht ist.

3. Schweißspiegel (1) nach Anspruch 1, **dadurch gekennzeichnet, dass** die Kontaktschicht (3) auf eine Verschleißplatte (7) aufgebracht ist, welche lösbar mit dem Grundmaterial (4) verbunden ist.

4. Verschleißplatte (7) zum lösbaren Verbinden mit einem Grundmaterial (4) eines Schweißspiegels (1),
**dadurch gekennzeichnet, dass**
eine Kontaktschicht (3) aufgebracht ist, welche eine metallische Trägermatrix (5) mit darin eingelagerten nichtmetallischen Partikeln (6) aufweist.

5. Schweißspiegel (1) oder Verschleißplatte (7) nach einem der vorhergehenden Ansprüche, **dadurch gekennzeichnet, dass** die Kontaktschicht (3) eine Schichtstärke von 1 - 1000 µm aufweist.

6. Schweißspiegel (1) oder Verschleißplatte (7) nach einem der vorhergehenden Ansprüche, **dadurch gekennzeichnet, dass** die nichtmetallischen Partikel (6) eine Partikelgröße d₅₀ nach Gauß 'scher Normalverteilung von 0,1 - 50 µm aufweisen.

7. Schweißspiegel (1) oder Verschleißplatte (7) nach einem der vorhergehenden Ansprüche, **dadurch gekennzeichnet, dass** das Grundmaterial (4) und/oder die Verschleißplatte (7) aus einer Legierung mit Eisen, Kupfer und/oder Aluminium besteht.

8. Schweißspiegel (1) oder Verschleißplatte (7) nach einem der vorhergehenden Ansprüche, **dadurch gekennzeichnet, dass** das Grundmaterial (4) und/oder die Verschleißplatte (7) aus einem keramischen Material, insbesondere einem keramischen Material mit elektrischer Leitfähigkeit, besteht.

9. Schweißspiegel (1) oder Verschleißplatte (7) nach einem der vorhergehenden Ansprüche, **dadurch gekennzeichnet, dass** die nichtmetallischen Partikel eines oder mehrere der nachfolgenden Materialen umfassen:
Keramik, PEEK, PPSU, PTFE, PFA, MFA, FEP und/oder CFx.

10. Schweißspiegel (1) oder Verschleißplatte (7) nach einem der vorhergehenden Ansprüche, **dadurch gekennzeichnet, dass** das die Kontaktschicht (3) tragende Material (4, 7) eine strukturierte Oberfläche mit einer mittleren Rauheit von 1 - 1000 µm aufweist.

11. Schweißspiegel (1) oder Verschleißplatte (7) nach einem der vorhergehenden Ansprüche, **dadurch gekennzeichnet, dass** die metallische Trägermatrix (5) chemisch oder elektrochemisch aufgebracht ist.

12. Schweißspiegel (1) oder Verschleißplatte (7) nach einem der vorhergehenden Ansprüche, **dadurch gekennzeichnet, dass** die metallische Trägermatrix (5) Nickel, Nickel-Phosphor und/oder Kupfer aufweist.

13. Schweißspiegel (1) oder Verschleißplatte (7) nach einem der vorhergehenden Ansprüche, **dadurch gekennzeichnet, dass** die Anzahl der nichtmetallischen Partikel (6) in der metallischen Trägermatrix (5) sich je nach Abstand von dem die Kontaktschicht (3) tragenden Material (4, 7) verändert, insbesondere mit zunehmendem Abstand von dem die Kontaktschicht (3) tragenden Material (4, 7) zunimmt.

14. Schweißspiegel (1) oder Verschleißplatte (7) nach einem der vorhergehenden Ansprüche, **dadurch gekennzeichnet, dass** die Kontaktschicht (3) auf der Oberfläche des die Kontaktschicht (3) tragenden Materials (4, 7) der Querschnittsform der zu schweißenden Bauteile (2) folgend ausgebildet ist.

## Claims

1. Welding mirror (1) for welding polyolefins, comprising
1.1 a base material (4) which can be heated by heating elements; and
1.2 a contact layer (3) which is arranged on the base material (4) and which is intended to come into contact with the polyolefins when the latter melt, **characterized in that**
1.3 the contact layer (3) comprises a metal carrier matrix (5) with non-metal particles (6) embedded therein.

2. Welding mirror (1) according to claim 1, **characterized in that** the contact layer (3) is applied to the base material (4).

3. Welding mirror (1) according to claim 1, **characterized in that** the contact layer (3) is applied to a wear plate (7) which is detachably connected to the base material (4).

4. Wear plate (7) for detachable connection to a base material (4) of a welding mirror (1),
**characterized in that**
a contact layer (3) is applied, which comprises a metal carrier matrix (5) with non-metal particles (6) embedded therein.

5. Welding mirror (1) or wear plate (7) according to one of the preceding claims, **characterized in that** the contact layer (3) has a layer thickness of 1 - 1000 µm.

6. Welding mirror (1) or wear plate (7) according to one of the preceding claims, **characterized in that** the non-metal particles (6) have a particle size dso according to the Gaussian normal distribution of 0.1 - 50 µm.

7. Welding mirror (1) or wear plate (7) according to one of the preceding claims, **characterized in that** the base material (4) and/or the wear plate (7) is made of an alloy that contains iron, copper and/or aluminium.

8. Welding mirror (1) or wear plate (7) according to one of the preceding claims, **characterized in that** the base material (4) and/or the wear plate (7) is made of a ceramic material, in particular a ceramic material with electrical conductivity.

9. Welding mirror (1) or wear plate (7) according to one of the preceding claims, **characterized in that** the non-metal particles comprise one or more of the following materials:
ceramic, PEEK, PPSU, PTFE, PFA, MFA, FEP and/or CFx.

10. Welding mirror (1) or wear plate (7) according to one of the preceding claims, **characterized in that** the material (4, 7) carrying the contact layer (3) has a structured surface with a mean roughness of 1 - 1000 µm.

11. Welding mirror (1) or wear plate (7) according to one of the preceding claims, **characterized in that** the metal carrier matrix (5) is applied chemically or electrochemically.

12. Welding mirror (1) or wear plate (7) according to one of the preceding claims, **characterized in that** the metal carrier matrix (5) comprises nickel, nickel-phosphorus and/or copper.

13. Welding mirror (1) or wear plate (7) according to one of the preceding claims, **characterized in that** the number of non-metal particles (6) in the metal carrier matrix (5) varies depending on the distance from the material (4, 7) carrying the contact layer (3), in particular increases as the distance from the material (4, 7) carrying the contact layer (3) increases.

14. Welding mirror (1) or wear plate (7) according to one of the preceding claims, **characterized in that** the contact layer (3) is formed on the surface of the material (4, 7) carrying the contact layer (3) in a manner following the cross-sectional shape of the components (2) to be welded.

## Revendications

1. Lame chauffante (1) pour le soudage de polyoléfines, avec
1.1 un matériau de base (4) pouvant être chauffé par des éléments chauffants et
1.2 une couche de contact (3) disposée sur le matériau de base (4), qui est destinée à venir en contact avec les polyoléfines lors de la fusion de celles-ci,
**caractérisée en ce que**
1.3 la couche de contact (3) présente une matrice portante métallique (5) dans laquelle des particules non métalliques (6) sont incluses.

2. Lame chauffante (1) selon la revendication 1, **caractérisée en ce que** la couche de contact (3) est appliquée sur le matériau de base (4).

3. Lame chauffante (1) selon la revendication 1, **caractérisée en ce que** la couche de contact (3) est appliquée sur une plaque d'usure (7) qui est assemblée de façon amovible avec le matériau de base (4).

4. Plaque d'usure (7) destinée à être assemblée de façon amovible avec un matériau de base (4) d'une lame chauffante (1), **caractérisée en ce qu'**une couche de contact (3) comportant une matrice portante métallique (5) dans laquelle des particules non métalliques (6) sont incluses est appliquée.

5. Lame chauffante (1) ou plaque d'usure (7) selon l'une des revendications précédentes, **caractérisée en ce que** la couche de contact (3) présente une épaisseur de couche de 1 à 1000 µm.

6. Lame chauffante (1) ou plaque d'usure (7) selon l'une des revendications précédentes, **caractérisée en ce que** les particules non métalliques (6) ont une taille de particules d₅₀ selon une répartition normale gaussienne de 0,1 à 50 µm.

7. Lame chauffante (1) ou plaque d'usure (7) selon l'une des revendications précédentes, **caractérisée en ce que** le matériau de base (4) et/ou la plaque d'usure (7) se composent d'un alliage contenant du fer, du cuivre et/ou de l'aluminium.

8. Lame chauffante (1) ou plaque d'usure (7) selon l'une des revendications précédentes, **caractérisée en ce que** le matériau de base (4) et/ou la plaque d'usure (7) se composent d'un matériau céramique, en particulier d'un matériau céramique conducteur électrique.

9. Lame chauffante (1) ou plaque d'usure (7) selon l'une des revendications précédentes, **caractérisée en ce que** les particules non métalliques contiennent un ou plusieurs des matériaux suivants : céramique, PEEK, PPSU, PTFE, PFA, MFA, FEP et/ou CFx.

10. Lame chauffante (1) ou plaque d'usure (7) selon l'une des revendications précédentes, **caractérisée en ce que** le matériau (4, 7) portant la couche de contact (3) présente une surface structurée ayant une rugosité moyenne de 1 à 1000 µm.

11. Lame chauffante (1) ou plaque d'usure (7) selon l'une des revendications précédentes, **caractérisée en ce que** la matrice portante métallique (5) est appliquée par un procédé chimique ou électrochimique.

12. Lame chauffante (1) ou plaque d'usure (7) selon l'une des revendications précédentes, **caractérisée en ce que** la matrice portante métallique (5) contient du nickel, du nickel allié à du phosphore et/ou du cuivre.

13. Lame chauffante (1) ou plaque d'usure (7) selon l'une des revendications précédentes, **caractérisée en ce que** le nombre de particules non métalliques (6) dans la matrice portante métallique (5) change avec la distance par rapport au matériau (4, 7) portant la couche de contact (3) et particulier augmente quand la distance par rapport au matériau (4, 7) portant la couche de contact (3) augmente.

14. Lame chauffante (1) ou plaque d'usure (7) selon l'une des revendications précédentes, **caractérisée en ce que** la couche de contact (3) est formée sur la surface du matériau (4, 7) portant la couche de contact (3) en suivant la forme en section des pièces (2) à souder.
